# EUROPÄISCHE PATENTSCHRIFT

(11) **EP 3 219 436 B1**
(45) Veröffentlichungstag und Bekanntmachung des Hinweises auf die Patenterteilung: **07.11.2018**
(21) Anmeldenummer: 16000670.6
(22) Anmeldetag: 19.03.2016
(51) Int. Cl.: B23Q 1/52, B23K 37/04, B25H 1/00, B25H 1/14, B25H 1/18, F16C 23/08

(54) **VORRICHTUNG ZUM MOTORISCHEN DREHEN EINES STARREN WERKSTÜCKTRÄGERS IN ENTGEGENGESETZTEN DREHRICHTUNGEN**
DEVICE FOR THE MOTORIZED ROTATING A RIGID WORK PIECE SUPPORT IN OPPOSING DIRECTIONS OF ROTATION
DISPOSITIF DE ROTATION MOTORISE D'UN PORTE-OUTIL FIXE DANS DES DIRECTIONS DE ROTATION OPPOSEES

(43) Veröffentlichungstag der Anmeldung: 20.09.2017
(73) Patentinhaber: Expert-Tünkers GmbH, 64653 Lorsch (DE)
(72) Erfinder: Müller, Michael, 64646 Heppenheim (DE)
(74) Vertreter: Beyer, Rudi

(56) Entgegenhaltungen:
- EP-A1- 2 093 642
- DE-A1- 2 944 756
- DE-A1- 4 118 305
- DE-A1- 19 512 363
- DE-A1-102004 038 502
- GB-A- 607 803
- US-A- 2 340 707
- US-A- 4 093 199
- US-A1- 2011 101 586
- US-B1- 7 434 491

## Beschreibung

Die Erfindung betrifft eine Vorrichtung zum motorischen Drehen eines starren, rahmenförmigen Werkstückträgers in entgegengesetzten Drehrichtungen zum Anordnen von Werkstücken, beispielsweise von Bauteilen für den Karosseriebau der Kfz-Industrie, wobei der Werkstückträger an jeder Stirnseite je eine Flanschwelle aufweist, wobei beide Flanschwellen jeweils einem Lagerpodest zugeordnet sind, die den Werkstückträger oberhalb des Aufstellbodens drehbar lagern und eine Flanschwelle über einen Trommelantrieb mit horizontaler Drehachse in vorbestimmten Drehwinkelstellungen antreibbar und in diesen Stellungen auch anhaltbar und blockierbar ist, um bestimmte Arbeiten an den auf dem Werkstückträger angeordneten Werkstücken durchzuführen.

### Stand der Technik

Vorrichtungen zum motorischen Drehen eines starren Werkstückträgers gehören zum Stand der Technik. Derartige Werkstückträger können unterschiedliche Gestalt aufweisen. Zum einen gibt es Werkstückträger, die in der Draufsicht rechteckförmig, rahmenartig gestaltet sind. Andere Werkstückträger besitzen im Querschnitt eine etwa dreieckförmige oder polygonförmige Gestaltung und bestehen ebenfalls aus rahmenartigen Gebilden, wobei in unterschiedlichen Ebenen Werkstücke auf dem Werkstückträger angeordnet sind. Die Werkstückträger können erhebliche Abmessungen und Gewichte aufweisen, insbesondere, wenn sie zum Befestigen von Karosseriebauteilen dienen. Die Werkstückträger sind in der Regel über Wellenstümpfe in beabstandeten Lagerpodesten gelagert, die beispielsweise einen Abstand von mehreren Metern, zum Beispiel von drei bis sechs Metern und mehr voneinander aufweisen können. Über diese Länge wirken sich Unebenheiten auf dem Lagerboden, Absatzbewegungen des Lagerbodens oder auch Toleranzunterschiede beim Aufstellen der Vorrichtung schädigend auf die Lager aus.

Aus der US 7,434,491 B1 ist eine Vorrichtung zum motorischen Drehen eines starren Werkstückträgers in entgegengesetzten Drehrichtungen zum Anordnen von Werkstücken vorbekannt, wobei der Werkstückträger an jeder Stirnseite je eine Flanschwelle aufweist, wobei beide Flanschwellen jeweils einem Lagerpodest zugeordnet sind, die den Werkstückträger oberhalb des Aufstellbodens drehbar lagern, und eine Flanschwelle über einen Antrieb mit horizontaler Drehachse in vorbestimmten Drehwinkelstellungen antreibbar und in diesen Stellungen auch anhaltbar und blockierbar ist, um bestimmte Arbeiten an den auf dem Werkstückträger angeordneten Werkstücken durchzuführen und beide Flanschwellen in Stehlagern mit Pendelrollenlagern zur Erzielung eines zulässigen Axial- und Winkelversatzes zum Ausgleich eines eventuellen Setzverhalts des Aufstellbodens gelagert sind.

Die US 2,340,707 zeigt eine Vorrichtung mit zwei beabstandeten, in der Seitenansicht dreieckförmigen Lagerböcken, die parallel und senkrecht auf einem rechteckförmigen Bodenrahmen angeordnet sind, der über Rollen auf dem Aufstellboden verfahrbar angeordnet ist. Die in der Seitenansicht dreieckförmigen Lagerböcke tragen einen um ein begrenztes Maß hin und her schwenkbaren Rahmen, gebildet aus zwei beabstandeten Trägern, die durch eine ebene Platte in der Mitte miteinander verbunden sind, wobei der Rahmen um Zapfen schwingbar ist. Angetrieben wird der Rahmen durch eine Kurbel von Hand, die ein Schneckengetriebe antreibt, um den Rahmen um die Zapfen in verschiedene Neigungen zu verstellen.

Aus der DE 41 18 305 A1 ist eine Vorrichtung zum schrittweisen Drehen von zu bearbeitenden Werkstücken mit einer ein Werkstück haltenden Halteeinrichtung vorbekannt, welche auf einer Drehwelle sitzt, der ein Schrittantrieb zugeordnet ist, wobei auf der Drehwelle ein freilaufendes Zahnrad aufsitzt, welches mit einer Zahnstange kämmt, die selbst als Schlitten ausgebildet oder mit einem Schlitten verbunden ist, der über eine Schubstange mit einem Antrieb in Verbindung steht, entsprechend P 40 27 465.9, wobei der Drehwelle eine Sperreinrichtung zugeordnet ist, welche die Drehwelle nach einer vorbestimmten Winkeldrehung festlegt.

Die GB 607 803 beschreibt eine Montagevorrichtung mit einem um ein begrenztes Maß in entgegengesetzten Schwenkrichtungen schwenkbaren Rahmen, auf dem Motorengehäuse angeordnet werden können. In der jeweiligen vorgegebenen Schwenkstellung kann ein Sperrstift in eine Bohrung eines Flansches eingesteckt werden, um die betreffende Schwenkstellung des Rahmens zu arretieren.

Aus der DE 195 12 363 A1 ist eine Flanschkupplung vorbekannt, die einen zur Kupplungsachse sich radial erstreckenden scheibenförmigen Kupplungsflansch, eine von dem Kupplungsflansch in dessen Zentralbereich axial abstehenden Nabe mit zylindrischer Innenfläche und konischer Außenfläche, einen umfangsseitig der Nabe angeordneten Spannring mit einer an die konische Außenfläche der Nabe angepassten konischen Innenfläche, kreisringförmige Kontaktflächen am Kupplungsflansch und am Spannring sowie Durchgangsbohrungen im Spannring durchsetzende, in Gewindebohrungen im Kupplungsflansch gedrehte, auf demselben Teilkreis liegende Spannschrauben aufweist, wobei der Winkel zwischen der konischen Außenfläche der Nabe bzw. der konischen Innenfläche des Spannrings einerseits und der Kupplungsachse andererseits 1° bis 3° beträgt und der Abstand des Teilkreises der Spannschrauben von der zylindrischen Innenfläche der Nabe im wesentlichen gleich dem Abstand des Teilkreises von der zylindrischen Außenfläche des Spannrings sowie etwa gleich der Dicke des Kupplungsflansches im Radialbereich der eine übereinstimmende Größe aufweisenden, bezüglich ihres Außendurchmessers durch einen Absatz am Kupplungsflansch definierten Kontaktflächen bemessen ist.

Aus der DE 29 44 756 ist eine Klemmvorrichtung vorbekannt zur nutlosen Anordnung einer Nabe auf einer Welle, mit einem ineinander sitzenden Paar von radial flexiblen Keilringen zur Anordnung innerhalb des Ringraumes zwischen der Nabenbohrung und der Welle und Längskraftelemente zum Pressen der Keilringe ineinander, um dadurch den einen der Keilringe radial zu erweitern und den anderen Keilring radial zu verengen, welche beiden Keilringe durch einen inneren Keilring mit einer zylindrischen Innenfläche zum Erfassen der Welle beim Verengen und durch einen äußeren Keilring gebildet wird, der eine zylindrische Außenfläche zum Erfassen der Bohrungsfläche der Nabe beim Ausweiten, welcher innere Keilring eine äußere ringförmige Fläche aufweist und der äußere Keilring eine innere ringförmige Fläche mit zueinander passenden flachwinkeligen axialen Verjüngungen zum Einsetzen des inneren Keilrings in den äußeren Keilring, wobei mindestens eine der zusammenpassenden sich verjüngenden Flächen mit einem stabilen trockenen Gleitwerkstoff beschichtet ist, der einen Kontakt mit Metall zu Metall verhindert, wobei der Winkel der zueinander passenden sich verjüngenden Flächen und die Reibungskoeffizienten der Ringflächen der Keilringe selbsthaltende Eigenschaften vermitteln, wobei jeder der inneren und äußeren Keilringe durch eine gleiche Anzahl von mehreren Umfangssektoren gebildet wird, wobei jeder Sektor des inneren Keilrings in der Umfangsrichtung mit einem Sektor des äußeren Keilrings ausgefluchtet ist und jedes Paar von ausgefluchteten Sektoren von dem benachbarten Paar ausgefluchteter Sektoren durch ein gemeinsames Drehanschlagelement getrennt ist, so dass jeder Umfangssektor nur einen Teil der Drehkraft zwischen den Keilringen überträgt, um dadurch eine maximale Drehbefestigung der Nabe auf der Welle und eine wesentlich verringerte Umfangsauslenkung der Keilringe unter Belastung zu erzielen.

### Aufgabe

Der Erfindung liegt die Aufgabe zugrunde, eine Vorrichtung der vorausgesetzten Art derart auszugestalten, dass ein etwaiger Achsversatz der beiden Trommelachsen folgenlos für den Trommelantrieb bleibt und dadurch ein genaues Drehen des Werkstückträgers ermöglicht wird.

### Lösung

Die Aufgabe wird durch eine Vorrichtung nach Anspruch 1 gelöst.

### Einige Vorteile

Bei der erfindungsgemäßen Vorrichtung kommt ein sogenannter Trommelantrieb zum Einsatz. Trommelantriebe besitzen eine horizontale Drehachse und bestehen in der Regel aus einem Drehteller, der über eine Nutwalze und Rollenbolzen angetrieben wird. Die Nutwalze erhält ihren Antrieb durch einen reversierbaren Elektromotor. Derartige als Trommelantriebe bezeichnete Antriebe ermöglichen ein äußerst genaues Ansteuern vorbestimmter Bearbeitungspositionen. Die beiden Flanschwellen für die drehbare Lagerung des Werkstückträgers sind in Stehlagern mit Pendelrollenlagern mit zulässigem Axial- und Winkelversatz zum exakten, spannungsfreien Aufbau und zum Ausgleich eines eventuellen Setzverhaltens des Hallenbodens gelagert. Die Flanschrollen können einen nicht unerheblichen Abstand vom Aufstellboden aufweisen, zum Beispiel einen oder mehrere Meter über dem Aufstellboden, zum Beispiel 1,6 m über dem Aufstellboden, angeordnet sein. Auf der dem Trommelantrieb abgekehrten Seite ist der dortigen Flanschwelle ein integrierter Medienverteiler zugeordnet. Die Flanschwellen besitzen verstärkte Anschlussflansche, während der Trommelantrieb mit einer Drehmomentenstütze ausgebildet ist. Dadurch übernimmt der Trommelantrieb bei der Erfindung keinerlei Festlagerfunktion. Bei der Erfindung erfolgt die Anbindung des Trommelantriebs im Werkstückträger quasi schwimmend mit Hilfe einer Drehmomentstütze. Ein etwaiger Achsversatz der beiden Trommelachsen bleibt folgenlos für den Trommelantrieb. Außerdem ermöglicht die erfindungsgemäße Lösung die Nutzung einer Montageabsteckung auch bei demontiertem Trommelantrieb.

### Weitere erfinderische Ausgestaltungen

Weitere erfinderische Ausgestaltungen sind in den **Patentansprüchen 2** bis **3** beschrieben.

In der Zeichnung ist die Erfindung - teils schematisch - an einem Ausführungsbeispiel veranschaulicht. Es zeigen:
- Fig. 1: eine Vorrichtung gemäß der Erfindung in perspektivischer Darstellung mit einem in der Draufsicht rechteckförmig und rahmenartig ausgebildeten Werkstückträger (ohne Werkstücke);
- Fig. 2: eine Ansicht auf einen Trommelantrieb für die aus Fig. 1 ersichtliche Vorrichtung, wobei der Drehtisch teils herausgebrochen dargestellt ist, um die als Präzisionsrollenbolzen ausgebildeten Rollenbolzen und die Nutwalze zu zeigen;

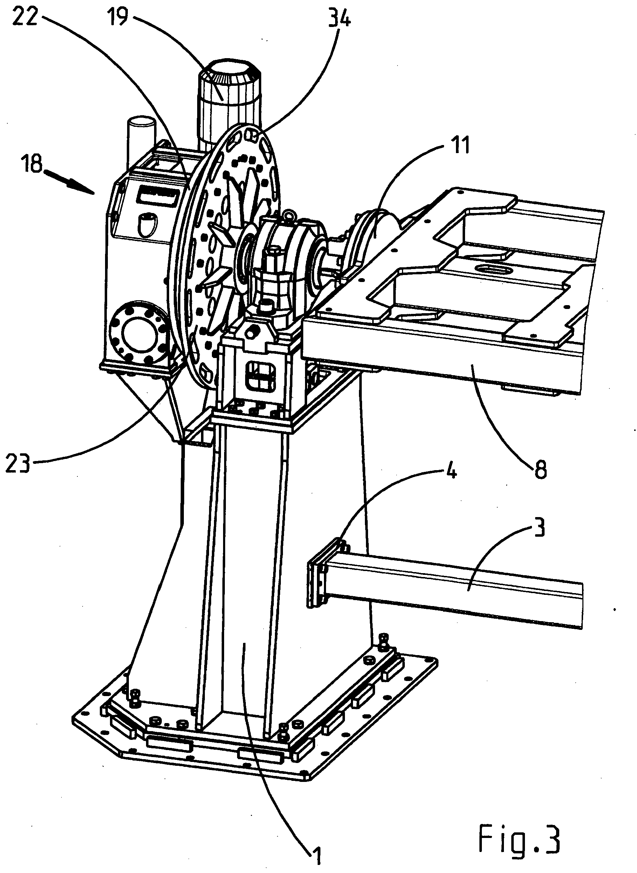

- Fig. 3: eine Einzelheit aus Fig. 1, ebenfalls in perspektivischer Darstellung, abgebrochen dargestellt, in anderem Maßstab;
- Fig. 4: eine Einzelheit aus Fig. 1, in der Seitenansicht, in größerem Maßstab;

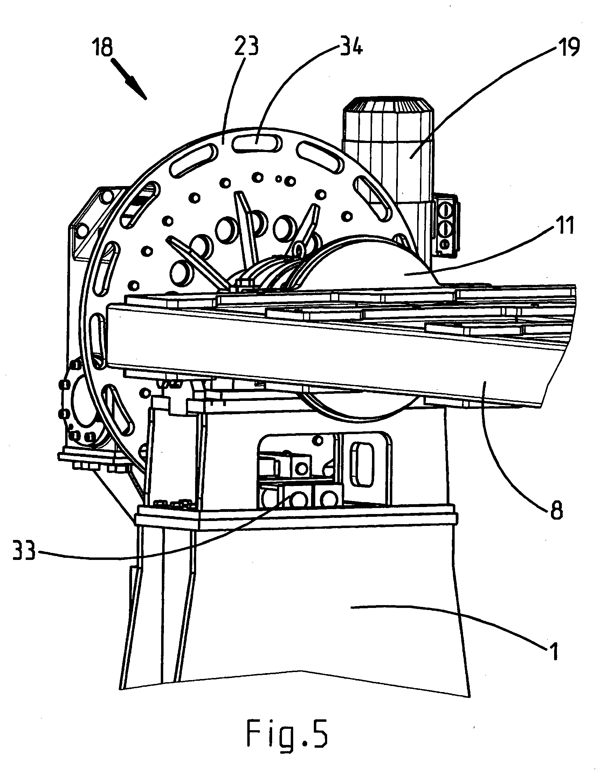

- Fig. 5: eine Einzelheit aus Fig. 4, in größerem Maßstab, ebenfalls in perspektivischer Darstellung mit integrierter Wartungsabsteckung;
- Fig. 6: eine weitere Einzelheit aus Fig. 1, ähnlich wie die Einzelheit aus Fig. 5, allerdings in anderer Blickrichtung, in größerem Maßstab und mit der Wartungsabsteckung in ausgefahrener Position (Wartungsflansch und damit Drehtisch blockiert);
- Fig. 7: einen Längsschnitt durch die aus Fig. 1 ersichtliche Vorrichtung;
- Fig. 8: die Lagerung und kraftschlüssige Verbindung der Flanschwelle mit dem dem Trommelantrieb zugeordneten Flansch.

Mit den Bezugszeichen 1 oder 2 sind zwei im Abstand zueinander angeordnete Lagerpodeste aus Stahl bezeichnet, die durch ein aus Stahl bestehendes Profilrohr 3 miteinander verbunden sind. Das Profilrohr 3 ist über Flansche 4 oder 5 mittels nicht näher bezeichneter Schrauben einstückig mit dem jeweiligen Lagerpodest 1 oder 2 lösbar verbunden. Das Profilrohr 3 dient als Montagehilfe und dient z. B. auch zur sicheren Abstandsbestimmung der Lagerpodeste 1, 2 voneinander.

Jedes Lagerpodest 1 oder 2 stützt sich bei der dargestellten Ausführungsform jeweils über eine Bodenplattenanordnung 6 oder 7 auf dem jeweiligen Aufstellboden, zum Beispiel einer Fertigungshalle im Karosseriebau der Kfz-Industrie, lösbar ab.

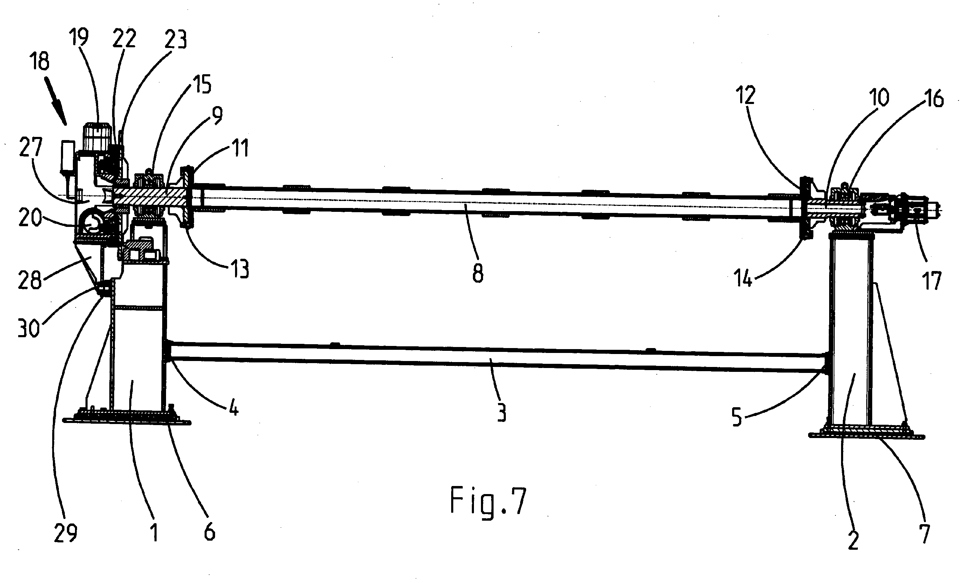

Wie insbesondere aus Fig. 7 zu erkennen ist, sind die Lagerpodeste 1, 2 kastenförmig gestaltet und durch Quer- und Längsstreben zur Erhöhung ihres jeweiligen Widerstandsmoments verstärkt ausgebildet.

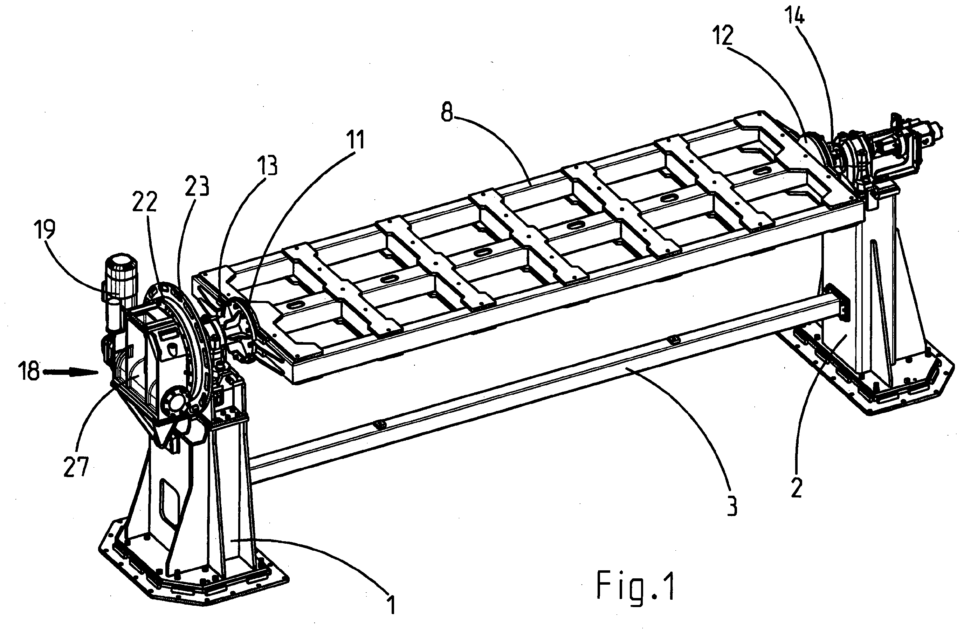

Zwischen den Lagerpodesten 1 und 2 ist ein rahmenförmiger Werkstückträger 8 in entgegengesetzten Richtungen, bevorzugt um 360 Grad beliebig, insbesondere schrittweise, drehbar, und in der jeweils gewünschten Winkelstellung anhaltbar und arretierbar ausgebildet. Der Werkstückträger 8 ist bei der dargestellten Ausführungsform in der Draufsicht rechteckförmig gestaltet (Fig. 1) und über Quer- und Längsrippen verwindungssteif ausgebildet. Auf dem Werkstückträger 8 können geeignete Werkstücke, insbesondere Bleche oder Karosserieteile im Karosseriebau der Kfz-Industrie, angeordnet werden, die in beliebigen Winkelstellungen durch den Werkstückträger 8 drehbar sind, um an ihnen geeignete Arbeiten, zum Beispiel Schweißarbeiten oder Kleberarbeiten, bevorzugt durch mehrachsige Roboter (nicht dargestellt), durchzuführen.

Der Werkstückträger 8 ist über Flanschwellen 9, 10 drehbar gelagert. Zu diesem Zweck ist dem Werkstückträger 8 an jeder Stirnseite jeweils ein Flansch 11 bzw. 12 zugeordnet, der mit dem Werkstückträger 8 getrieblich verbunden ist. Dem Flansch 11 oder 12 ist jeweils ein Flansch 13 oder 14 der Flanschwelle 9 bzw. 10 zugeordnet. Die jeweils einander gegenüberliegenden Flansche 11, 13 und 12, 14 sind getrieblich, insbesondere durch Schraubverbindungen, miteinander lösbar gekuppelt. Der Flansch 13 ist mit der Flanschwelle 9 getrieblich verbunden und der Flansch 14 mit der Flanschwelle 10.

Die Flanschwellen 9 und 10 sind jeweils in einem Stehlager mit Pendelrollenlagern 15 bzw. 16 gelagert. Die Pendelrollenlager 15, 16 können im Bedarfsfalle beide mit zulässigem Axial- und Winkelversatz zum exakten, spannungsfreien Aufbau und zum Ausgleich eines eventuellen Setzverhaltens des Hallenbodens ausgebildet sein, jedoch wird man bevorzugt eines der Pendelrollenlager 15 oder 16 als Axialfestlager ausbilden, bevorzugt auf Seiten des Drehantriebs.

Bei 17 ist ein integrierter Drehverteiler, zum Beispiel ein Rekofa-Drehverteiler, angeordnet.

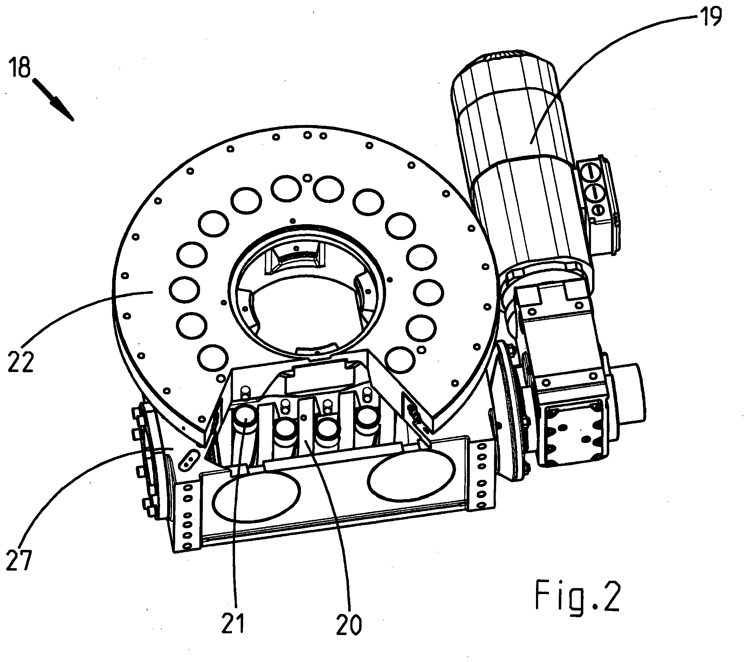

Die Flanschwelle 9 wird durch einen Trommelantrieb 18 angetrieben, dem ein Elektromotor, insbesondere ein Asynchronmotor 19, zugeordnet ist. Der Elektromotor 19 ist vorliegend als Servomotor mit Multiturn-Absolut-Wertgeber ausgebildet, dem getrieblich eine Nutwelle 20 (Fig. 2) zugeordnet ist, die in entgegengesetzten Richtungen durch den Motor 19 antreibbar ist und die über Präzisionsrollenbolzen 21 einen Drehteller 22 über eine horizontal und koaxial zur Flanschwelle 9 angeordnete Drehachse antreibt. Hierdurch ergibt sich eine präzise Positionierung durch spielarme, torsionssteife Übertragungselemente, einer flachen Walzensteigung und Vorspannung der Tischplatte. Es ist keine zusätzliche Positionsabsteckung erforderlich, wodurch sich kein Taktzeitverlust ergibt. Die der Nutwelle 20 zugeordnete Kurve wird mathematisch je nach den Betriebsbedingungen bestimmt. Es kann sich auch um eine Nutwalze oder um eine Stegwalze oder um eine Globoidwalze, handeln. Die Form und Steigung der Kurve kann das Geschwindigkeits- und Beschleunigungsprofil abbilden und im Bedarfsfalle auch Rastgänge nachweisen, in denen die Nut der Nutwelle 20 keine Steigung besitzt. In der Regel werden sich mehrere Rollenbolzen 21 im Eingriff mit der Nut der Nutwelle 20 befinden, wodurch eine vielfache Drehmomentübertragung in beiden Drehrichtungen gegeben ist.

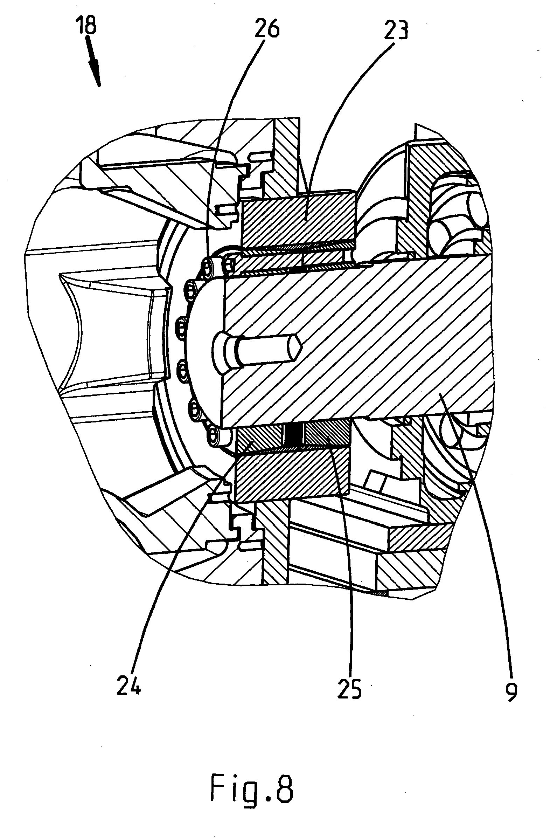

Auf der Flanschwelle 9 ein als Absteckflansch ausgebildeter Antriebsflansch 23 getrieblich angeordnet. Die Befestigung auf der Flanschwelle 9 wird - wie aus Fig. 8 ersichtlich ist - durch Keilringe 24, 25 erreicht, die eine Klemmverbindung bilden, die mit ihren Keil-Längenabschnitt gegeneinander gerichtet sind und die über zahlreiche mit gleichmäßigem Winkelabstand über den Umfang der Klemmverbindungen 24, 25 verteilte Schrauben 26 in Achsrichtung gegeneinander gezogen werden, wodurch die Klemmverbindungen 24 und 25 große axial und radial gerichtete Kräfte in die Nabe des Antriebsflansches 23 einerseits und gegen den Umfang der Flanschwelle 9 andererseits ausüben, so dass der Antriebsflansch 23 kraftschlüssig funktional einstückig auf der Flanschwelle 9, aber lösbar, angeordnet ist. Die Klemmverbindung 24, 25 ist selbstzentrierend.

Dem Gehäuse 27 des Trommelantriebs 18 ist einstückig ein Ansatz 28 zugeordnet, der über eine Lagerung 29 ein z. B. als Kugellager ausgebildetes raumgelenkiges Lager 30 aufnimmt. In dieses Kugellager 30 greift eine Drehmomentstütze 31 ein, die dem Lagerpodest 1 zugeordnet ist und mit einem Ansatz 32 mit diesem einstückig, aber lösbar, verbunden ist.

Durch die besondere Ausbildung und Lagerung ist ein eventueller Achsversatz der beiden als Pendelrollenlager ausgebildeten Hauptlager 15 und 16 schadlos für den Trommelantrieb 18.

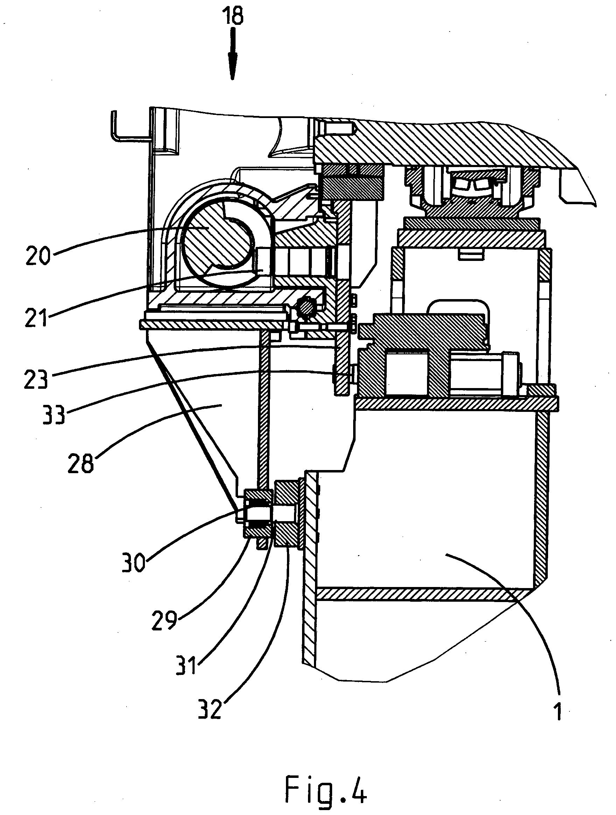

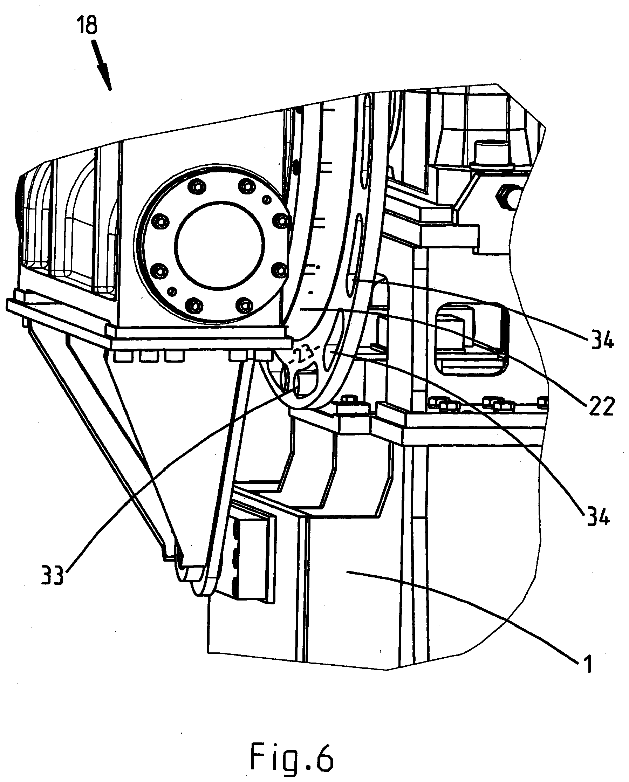

Mit dem Bezugszeichen 33 ist eine integrierte Wartungsabsteckung bezeichnet, die in Fig. 4 und 6 in ausgefahrenem Zustand veranschaulicht ist. Wie man erkennt, wird die Wartungsabsteckung 33 motorisch, zum Beispiel durch eine abwechselnd beidseitig durch Druckluft beaufschlagte Kolben-Zylinder-Einheit angetrieben und umfasst zum Beispiel mehrere Bolzen, die in Aussparungen 34 des Antriebsflansches 23 des Trommelantriebs 18 z. B. formschlüssig eingreifen und dadurch den Antriebsflansch 23 sicher blockieren. Wie man erkennt, ist die Wartungsabsteckung 33 im Lagerpodest 1, und zwar werkstückträgerseitig, zugeordnet. Dadurch ergibt sich eine platzsparende, modulare Konstruktion mit integrierter Wartungsabsteckung. Der Trommelantrieb 18 ist separat aufgeständert und kann dadurch separat ausgetauscht und/oder gewartet werden.

### Bezugszeichen

- 1: Lagerpodest
- 2: "
- 3: Profilrohr
- 4: Flansch
- 5: "
- 6: Bodenplattenanordnung
- 7: "
- 8: Werkstückträger
- 9: Flanschwelle
- 10: "
- 11: Flansch
- 12: "
- 13: "
- 14: "
- 15: Pendelrollenlager
- 16: "
- 17: Drehverteiler
- 18: Trommelantrieb
- 19: Elektromotor
- 20: Nutwalze
- 21: Rollenbolzen
- 22: Drehteller
- 23: Antriebsflansch
- 24: Klemmverbindung
- 25: "
- 26: Schrauben
- 27: Gehäuse
- 28: Drehmomentstütze
- 29: Lagerung
- 30: Kugellager
- 31: Haltebolzen
- 32: Ansatz
- 33: Wartungsabsteckung
- 34: Aussparung

## Patentansprüche

1. Vorrichtung zum motorischen Drehen eines starren, rahmenförmigen Werkstückträgers (8) in entgegengesetzten Drehrichtungen zum Anordnen von Werkstücken, beispielsweise von Bauteilen für den Karosseriebau der Kfz-Industrie, wobei der Werkstückträger (8) an jeder Stirnseite je eine Flanschwelle (9 oder 10) aufweist, wobei beide Flanschwellen (9 und 10) jeweils einem Lagerpodest (1 oder 2) zugeordnet sind, die den Werkstückträger (8) oberhalb des Aufstellbodens drehbar lagern und eine Flanschwelle (9) über einen Trommelantrieb (18) mit horizontaler Drehachse in vorbestimmten Drehwinkelstellungen antreibbar und in diesen Stellungen auch anhaltbar und blockierbar ist, um bestimmte Arbeiten an den auf dem Werkstückträger (8) angeordneten Werkstücken durchzuführen, wobei dem Trommelantrieb (18) ein Elektromotor, insbesondere ein Asynchronmotor (19), zugeordnet ist, dem eine Nutwelle (20) zugeordnet ist, die in entgegengesetzten Richtungen durch den Elektromotor (19) antreibbar ist und die über Präzisionsrollenbolzen (21) einen Drehteller (22) über eine horizontal und koaxial zur Flanschwelle (9) angeordnete Drehachse antreibt, wobei die dem Trommelantrieb (18) zugeordnete Flanschwelle (9) oder beide Flanschwellen (9 und 10) in Stehlagern mit Pendelrollenlagern (15, 16) zur Erzielung eines zulässigen Axial- und Winkelversatzes zum exakten, spannungsfreien Aufbau und zum Ausgleich eines eventuellen Setzverhaltens des Aufstellbodens gelagert sind, wobei dem Gehäuse (27) des Trommelantriebs (18) ein als Drehmomentstütze ausgebildeter Ansatz (28) funktionell oder materialmäßig einstückig zugeordnet ist, der sich über ein Gelenk, insbesondere über ein als Kugellager (30) ausgebildetes Raumgelenk an einer dem Lagerpodest (1) einstückig zugeordneten Drehmomentstütze (31) raumgelenkbeweglich abstützt, und wobei der dem separat aufgeständerten Trommelantrieb (18) zugeordneten Flanschwelle (9) ein Antriebsflansch (23) getrieblich zugeordnet ist, der über seinen Umfang mehrere Durchbrechungen oder Aussparungen (34) aufweist, mit denen eine motorisch angetriebene Wartungsabsteckung (33) formschlüssig oder kraftschlüssig zusammenwirkt, wobei die Wartungsabsteckung (33) dem Lagerpodest (1) zugeordnet ist.

2. Vorrichtung nach Anspruch 1, **dadurch gekennzeichnet, dass** die Wartungsabsteckung (33) aus einem oder mehreren in entgegengesetzten Richtungen ein- und ausfahrbaren Haltebolzen (31) besteht, die kraftschlüssig und/oder formschlüssig in eine oder in mehrere Aussparungen (34) des Antriebsflansches (23) in seiner bzw. in ihrer ausgefahrenen Position - Wartungsabsteckungsposition - eingreift bzw. eingreifen.

3. Vorrichtung nach Anspruch 1 oder 2, **dadurch gekennzeichnet, dass** der Antriebsflansch (23) über eine selbstzentrierende Klemmverbindung (24, 25) kraftschlüssig auf der Flanschwelle (9) angeordnet ist.

## Claims

1. Device for motor-driven rotation of a rigid, frame-shaped workpiece carrier (8) in opposing directions to position workpieces, for example, component parts for bodywork construction in the motor vehicle industry, where the workpiece carrier (8) incorporates on each end face a flanged shaft (9 or 10), where each of the two flanged shafts (9 and 10) is assigned a bearing pedestal (1 or 2) that rotatably supports the workpiece carrier (8) above the installation floor and a flanged shaft (9) can be driven by a drum drive (18) with a horizontal rotary axle at preset rotation angle settings and can also be stopped and locked in these positions to enable specific work tasks to be carried out on the workpieces arranged on the workpiece carrier (8), where the drum drive (18) is assigned an electric motor, particularly an asynchronous motor (19), that is assigned a splined shaft (20) that can be driven by the electric motor (19) in opposing directions and that drives a rotary plate (22) by means of precision roller bolts (21) and by means of a rotary axle arranged horizontally and coaxially with the flanged shaft (9), where the flanged shaft assigned to the drum drive (18) or both flanged shafts (9 and 10) is or are mounted in bearing pedestals with self-aligning roller bearings (15, 16) in order to obtain permissible axial and angular displacement for a precise, stress-free construction and compensate for any bedding down of the installation floor, where the housing (27) of the drum drive (18) is assigned as a torque support a functionally or materially integral projecting portion (28) that is by means of a swivel joint, particularly by means of a three-dimensionally swivelling joint constructed as a ball bearing (30), so braced against a torque support (31) integrally assigned to the bearing pedestal (1) that it can be moved in three-dimensions and where the flanged shaft (9) assigned to the separately supported drum drive (18) is connected by means of gearing to a driving flange (23) that incorporates around its outside edge through-holes or slots (34) with which a motor-driven maintenance pin-lock arrangement (33) interacts positively or non-positively, where the maintenance pin-lock arrangement (33) is assigned to the bearing pedestal (1).

2. Device in accordance with claim 1, **characterised in that** the maintenance pin-lock arrangement (33) consists of one or more retaining pins (31) that can be retracted and extended in opposing directions and engages or engage positively and/or non-positively in one or more slots (34) in the drive flange (23) in its or their extended position - the maintenance pin-locking position.

3. Device in accordance with claim 1 or 2, **characterised in that** the drive flange (23) is mounted non-positively on the flanged shaft (9) by means of a self-centring clamp connection (24, 25).

## Revendications

1. Dispositif de rotation motorisée d'un porte-pièces (8) rigide en forme de cadre dans des directions opposées, servant à disposer des pièces à usiner, par exemple des composants destinées à la construction de carrosseries automobiles, sachant que le porte-pièces à usiner (8) présente sur chaque côté frontal un arbre à bride (9 ou 10), sachant que les deux arbres à bride (9 et 10) sont affectés chacun à un piètement palier (1 ou 2) qui reçoivent en appui tournant le porte-pièces à usiner (8) au-dessus du sol, et qu'un arbre à bride (9) peut être entraîné via un entraînement à tambour (18) à axe de rotation horizontal pour atteindre par rotation des positions angulaires prédéfinies et qu'il peut également être arrêté et bloqué dans ces positions pour pouvoir réaliser des travaux précis sur les pièces à usiner disposées sur le porte-pièces à usiner (8), sachant qu'à l'entraînement à tambour (18) est affecté un moteur électrique, en particulier un moteur asynchrone (19) auquel est affecté un arbre à gorge (20) qui peut être entraîné dans des directions opposées par le moteur électrique (19), et qui via un goujon (21) à rouleaux de précision entraîne un plateau tournant (22) via un axe de rotation disposé horizontalement et coaxialement à l'arbre à bride (9), sachant que l'arbre à bride (9) affecté à l'entraînement à tambour (18) ou les deux arbres à bride (9 et 10) sont en appui dans des paliers verticaux équipés de roulements à rotules (15, 16) pour obtenir un déport axial et angulaire admissible afin d'obtenir un montage précis et exempt de tensions mécaniques, et pour compenser une éventuelle réaction de tassement du sol, sachant qu'est attribuée - de façon monobloc au plan fonctionnel ou matériel - au carter (27) de l'entraînement (18) de tambour, une équerre (28) configurée en bras de réaction qui prend appui de manière mobile articulée dans l'espace, en particulier via une articulation spatiale configurée en roulement à billes (30), contre un bras de réaction (31) affecté monobloc au piètement palier (1), et sachant qu'à l'arbre à bride (9) attribué à l'entraînement (18) de tambour sur montants à part est affectée par transmission une bride d'entraînement (23), bride qui présente sur sa circonférence plusieurs perforations ou évidements (34) avec lesquels interagit par adhérence de formes ou de forces un dispositif de délimitation (33) motorisé utilisé pour la maintenance, sachant que le dispositif de délimitation (33) pour la maintenance est affecté au piètement palier (1).

2. Dispositif selon la revendication 1, **caractérisé en ce que** le dispositif de délimitation (33) pour la maintenance se compose d'un ou plusieurs goujons (31) de retenue pouvant rentrer et sortir dans des directions opposées, qui engrène ou engrènent par adhérence de forces et/ou de formes dans un ou plusieurs évidement(s) (34) de la bride d'entraînement (23) lorsqu'il(s) se trouve(nt) en position sortie, c'est-à-dire en position de délimitation pour la maintenance.

3. Dispositif selon la revendication 1 ou 2, **caractérisé en ce que** la bride d'entraînement (23) est disposée par adhérence de forces sur l'arbre à brides (9) via un dispositif de bridage (24, 25) autocentré.
